# FASCICULE DE BREVET EUROPEEN

(11) **EP 1 278 984 B1**
(45) Date de publication et mention de la délivrance du brevet: **20.07.2005**
(21) Numéro de dépôt: 01931797.3
(22) Date de dépôt: 04.05.2001
(51) Int. Cl.: F16L 55/28, F16L 55/30

(54) **UN CHARIOT AUTOMOTEUR APTE A SE DEPLACER DANS UNE GALERIE CYLINDRIQUE**
EIN MOTORGETRIEBENER WAGEN FÄHIG ZUR BEWEGUNG IN EINEM ZYLINDRISCHEN STOLLEN
SELF-PROPELLED CARRIAGE CAPABLE OF MOVING IN A CYLINDRICAL TUNNEL

(30) Priorité: 04.05.2000 FR 0005694
(43) Date de publication de la demande: 29.01.2003
(73) Titulaire: COMPAGNIE DU SOL, 92000 Nanterre (FR)
(72) Inventeur: SABATIE, Jean-Marc, F-92000 Nanterre (FR)
(74) Mandataire: Dronne, Guy
(86) Numéro de dépôt international: PCT/FR2001/001367
(87) Numéro de publication internationale: WO 2001/084039

(56) Documents cités:
- WO-A-99/43529
- US-A- 3 872 940
- US-A- 4 526 106

## Description

La présente invention a pour objet un chariot automoteur apte à se déplacer dans une galerie de forme sensiblement cylindrique.

De façon plus précise, l'invention conceme un chariot automoteur qui peut se déplacer à l'intérieur de la galerie qui est réalisée par un tunnelier dans le sol, ce chariot automoteur servant de véhicule de service pour le tunnelier. Il peut servir notamment à amener auprès du tunnelier les éléments de voussoir et à permettre l'enlèvement des déblais.

De l'état de la technique on connait les chariots aptes à se déplacer dans une galerie selon les documents WO 99/43529 et US 3 872 940.

Dans certaines solutions connues, on dispose sur le fond de la galerie des rails sur lesquels se déplacent le ou les chariots, ces rails servant en particulier au guidage du chariot lorsque la galerie n'est pas rectiligne.

Une telle solution généralement adoptée présente bien sûr l'inconvénient de la nécessité de la mise en place de rails à l'intérieur de la galerie équipée de ces voussoirs ou plus précisément de son revêtement interne.

Une autre solution consisterait à prévoir, sur le chariot, un système de direction commandé par un utilisateur permettant de guider le chariot lorsque la galerie présente une portion en courbe. L'adjonction d'un ensemble de direction complique bien sûr la réalisation du chariot et impose la présence d'un opérateur lors des déplacements du chanot.

Un objet de la présente invention est de fournir un chariot automoteur qui puisse être déplacé dans une telle galerie sans qu'il soit nécessaire de mettre en place des rails et tout en évitant de prévoir sur ce chariot des moyens de commande de direction particuliers permettant de tenir compte de l'éventuel caractère non rectiligne d'au moins certaines portions de la galerie.

Pour atteindre ce but selon l'invention, le chariot automoteur apte à se déplacer dans une galerie de forme sensiblement cylindrique, comprend :
. un châssis constitué par deux trains de roues respectivement avant et arrière,
. une benne ; et
. un axe longitudinal de supportage horizontal sur lequel est montée à pivotement ladite benne selon le sens de sa longueur, chaque train de roues étant relié à une extrémité dudit axe de supportage.

Chaque train de roues comprend :
* deux bras, une première extrémité de chaque bras étant montée à pivotement sur une extrémité dudit axe de supportage, lesdits bras étant disposés dans un même plan orthogonal audit axe de supportage ;
* des moyens pour maintenir un écartement angulaire entre les deux bras ;
* deux arbres d'entraînement en rotation, chaque arbre étant monté à pivotement à la deuxième extrémité d'un des bras, lesdits arbres étant orthogonaux audit axe de supportage ;
* des moyens d'entraînement en rotation desdits arbres ; et
* deux roues, chaque roue comportant un moyeu solidaire d'un arbre d'entraînement en rotation, au moins un disque circulaire solidaire du moyeu dont la périphérie est munie d'une pluralité de galets de roulement aptes à coopérer avec la paroi cylindrique de ladite galerie, chaque galet étant monté libre en rotation autour d'un axe orthogonal à l'arbre d'entraînement en rotation de la roue.

On comprend que, grâce à la présence des galets qui constituent la "bande de roulement" de chaque roue, galets dont les axes sont sensiblement parallèles à la direction principale de déplacement, la composante globale de déplacement de chaque roue d'un train de roues résulte de la composition du déplacement principal rectiligne et du déplacement par roulement du galet selon une direction sensiblement orthogonale à la direction principale de déplacement. Cette composition des vecteurs de déplacement de l'ensemble du chariot permet le déplacement du chariot dans les parties courbes de la galerie sans qu'il soit nécessaire de prévoir un système de direction pour ce chanot. On comprend en particulier que la possibilité de libre rotation des galets évite les phénomènes de frottement et d'arc-boutement qui interdiraient ou perturberaient le déplacement du chariot lorsque la galerie présente un axe non rectiligne.

Selon un mode préféré de réalisation, le centre de gravité de la benne est disposé en dessous de l'axe de supportage de la benne et de façon préférentielle également, le centre de gravité de chaque train de roues est disposé en dessous du centre de gravité de la benne. Ces caractéristiques préférées permettent le retour à une position verticale du plan médian de la benne même en cas de courbure et favorisent le retour de chaque train de roues vers sa position d'équilibre, c'est-à-dire celle dans laquelle le plan médian du train de roues coincide sensiblement avec la verticale.

De préférence encore, chaque roue comporte trois disques parallèles entre eux, la périphérie de chacun des disques étant équipée de galets. Cette disposition permet d'accroître la surface de contact entre les roues et la paroi de la galerie et donc d'éviter l'altération de celle-ci par une charge ponctuelle trop élevée.

De préférence également, les axes des galets d'un disque sont décalés par rapport aux axes des galets des deux autres disques selon la direction de la périphérie de chaque disque. Ce décalage autorise une "continuité" de surface de roulement des galets selon la direction de l'arbre de chaque roue.

D'autres caractéristiques et avantages de l'invention apparaîtront mieux à la lecture de la description qui suit de plusieurs modes de réalisation de l'invention donnés à titre d'exemples non limitatifs. La description se réfère aux figures annexées, sur lesquelles :
- la figure 1 est une vue de côté du chariot automoteur ;
- la figure 2 est une vue de face du chariot automoteur avec le train de roues en position de repos ;
- la figure 3 est une vue de face d'une roue du chariot ;
- la figure 4 est une vue en coupe diamétrale d'une roue du chariot ;
- la figure 5 est une vue en perspective d'une roue du chariot ; et
- la figure 6 est une vue de face du chariot lorsque celui-ci est en train de franchir une courbe de la galerie dans laquelle il se déplace.

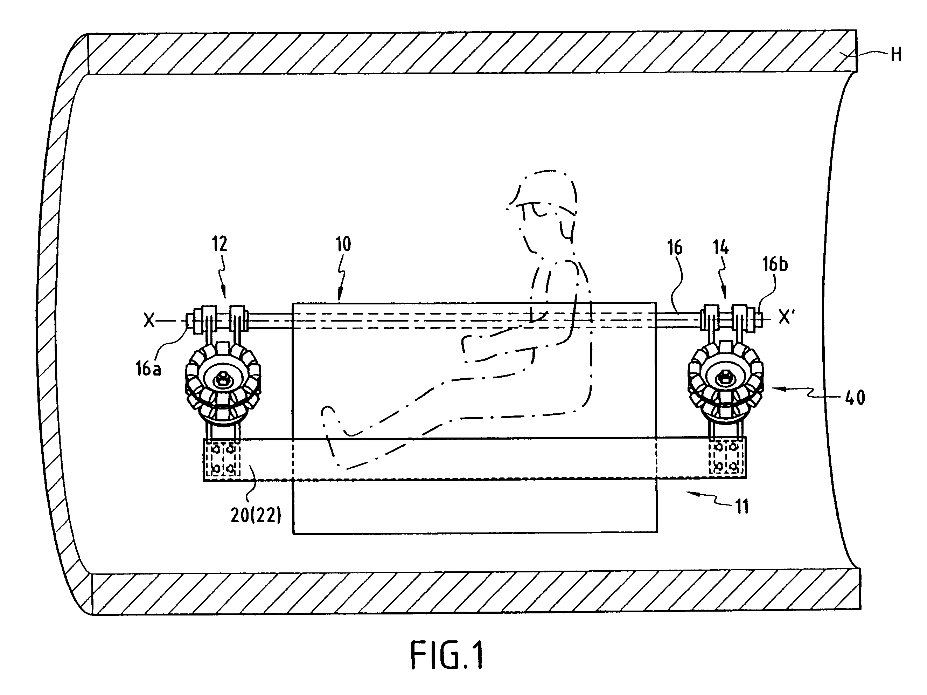

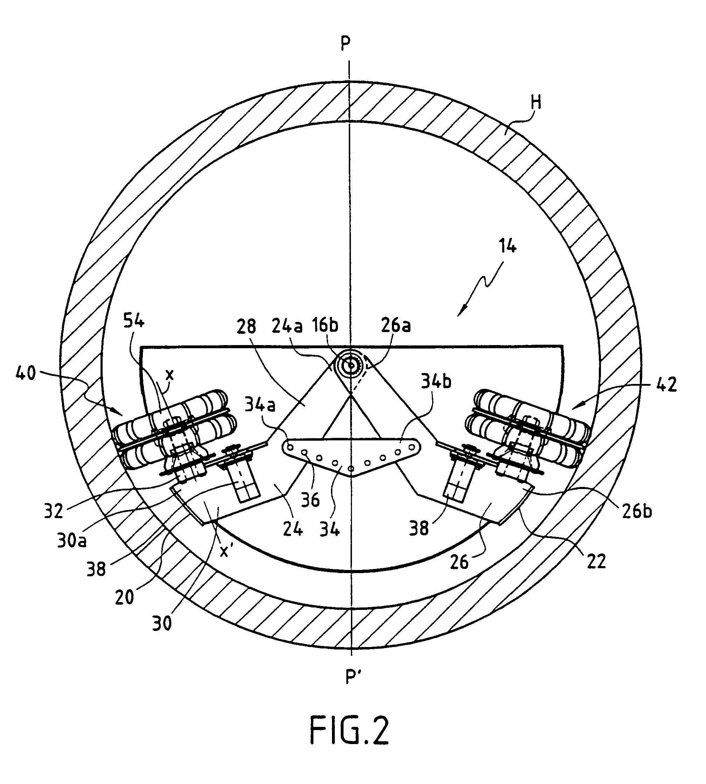

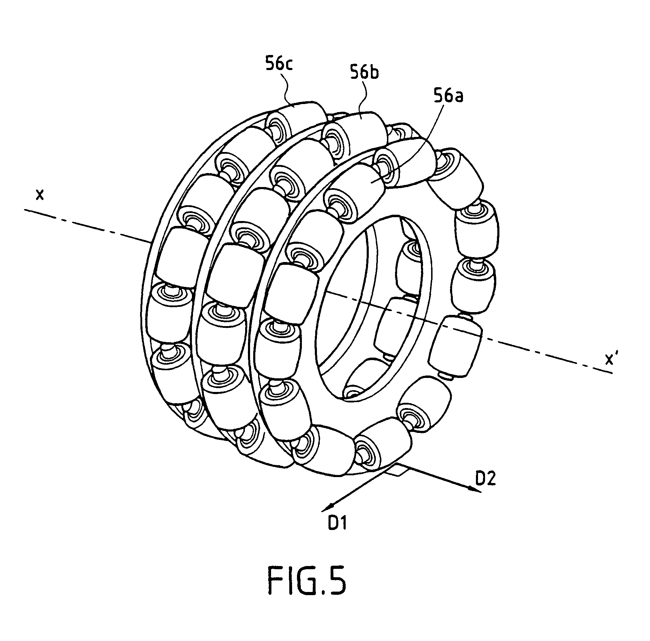

En se référant tout d'abord aux figures 1 et 2, on va décrire un mode préféré de réalisation du chanot automoteur. Celui-ci est constitué essentiellement par une benne 10 et par un châssis 11 comprenant un train de roues avant 12 et un train de roues arrière 14. Les deux trains de roues étant identiques, on décrira seulement, par exemple, le train de roues arrière 14.

La benne 10 qui peut avoir une forme sensiblement hémicylindrique est raccordée au châssis 11 par un axe longitudinal horizontal 16, la benne 10 étant montée pivotante par l'intermédiaire de paliers non représentés autour de l'axe 16. Sur chaque extrémité de l'axe 16, respectivement référencées 16a et 16b, sont montés oscillants les trains de roues 12 et 14. Comme on l'expliquera ultérieurement, les trains de roues 12 et 14 sont, de préférence, reliés entre eux par des longerons 20 et 22 qui s'étendent bien entendu hors de la benne 10 et parallèlement à l'axe longitudinal.

En se référant maintenant à la figure 2, on va décrire le train de roues arrière 14. Celui-ci est constitué par deux bras sensiblement identiques 24 et 26. Une première extrémité de chaque bras 24a, 26a est montée à pivotement par l'intermédiaire de paliers à l'extrémité 16b de l'axe horizontal de supportage 16. De préférence, chaque bras est constitué par une première portion sensiblement rectiligne 28 et par une deuxième portion 30 formant un angle avec la première portion 28. La deuxième extrémité 24b, 26b de chaque bras porte un arbre moteur 32 dont l'axe x, x' est orthogonal à la direction X, X' de l'axe de supportage 16. De plus, les extrémités des longerons 20 et 22 sont respectivement solidaires des extrémités 24b et 26b des trains de roues 12 et 14. Les deux trains de roues sont ainsi solidarisés pour constituer le châssis du chariot. L'angle entre les deux bras 24 et 26 d'un même train de roues est maintenu à une valeur constante par une pièce d'entretoise 34, dont les extrémités 34a et 34b sont solidaires de ces bras. L'entretoise 34 est munie de différents trous de fixation 36 qui permettent ainsi de régler l'angle que font les deux bras et donc d'adapter le train de roues au diamètre de la galerie dans laquelle le chariot automoteur doit se déplacer. Chaque bras 24, 26 est également équipé d'un moteur 38 qui coopère avec l'arbre 32 par des moyens de transmission convenables pour commander la mise en rotation de chacune des roues 40 et 42 du train de roues 14.

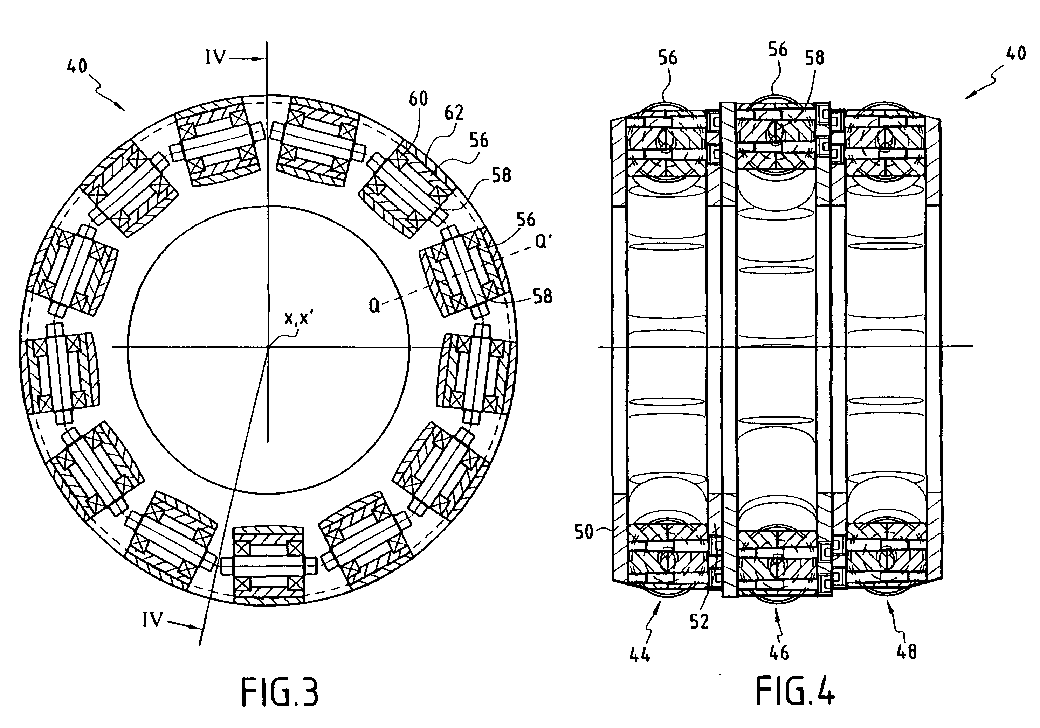

Comme le montrent mieux les figures 3 et 4, de préférence, chaque roue par exemple 40 est constituée par trois disques 44, 46, 48 parallèles entre eux constitués chacun par deux flasques 50 et 52 qui sont fixés sur un moyeu 54 lui-même solidaire de l'arbre de mise en rotation 32. A sa périphérie, chaque disque 44, 46, 48 est équipé de galets tels que 56 qui constituent la bande de roulement de chaque disque 44 à 48 et donc de l'ensemble de la roue 40. Ces galets sont montés libres en rotation sur des axes 58 solidaires des flasques 50 et 52, ces axes étant orthogonaux aux axes x, x' des arbres d'entraînement des roues et donc aux axes des roues. Les galets 56 sont régulièrement espacés à la périphérie des disques 44 à 48 et sont montés pivotants sur les axes 58 par des paliers 60. De préférence, les galets 56 sont réalisés en un matériau ayant un coefficient de frottement faible et leur face externe a la forme d'une surface de révolution dont l'axe est confondu avec celui des axes 58 et qui est définie par une portion d'arc de cercle 62 de telle manière que chaque galet ait la forme générale d'un tonneau.

Comme le montre mieux la figure 4, de préférence, le diamètre du cercle, sur lequel sont disposés les axes 58 des galets 56 du disque médian 46, est supérieur au diamètre du cercle correspondant pour les disques latéraux 44 et 48.

En outre, de préférence, les axes des galets 56a du disque 44, 56b du disque 46 et 56c du disque 48 sont angulairement décalés par rapport à l'axe de la roue, de telle manière que l'on ait une continuité de la bande de roulement de chaque roue constituée par les trois séries de galets 56a, 56b et 56c lorsqu'on regarde la roue selon la direction de son axe de rotation x, x'. En d'autres termes, les plans médians Q, Q' des galets 56 orthogonaux à leurs axes 58 sont décalés pour chaque disque.

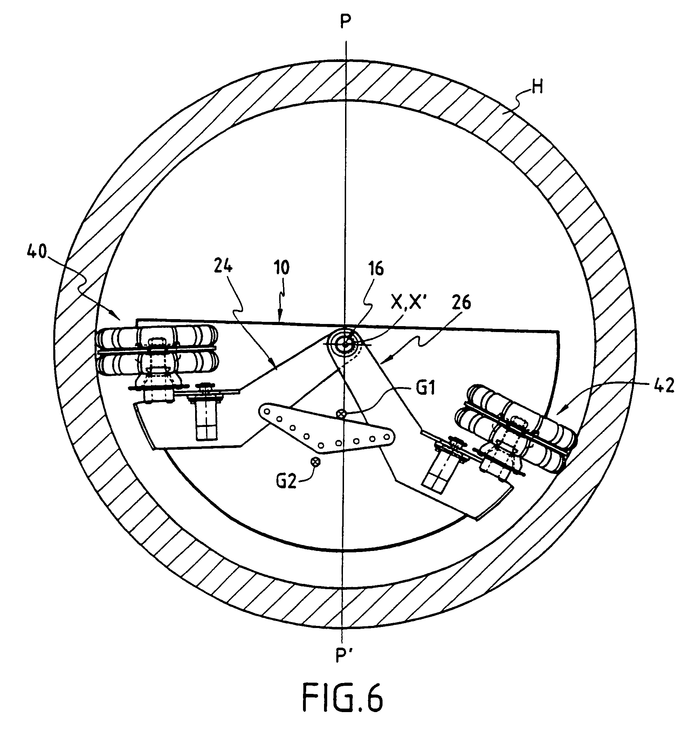

Comme le montre la figure 5, grâce à la présence des galets 56, les libres déplacements possibles de chaque roue 40, 42, par rapport à la paroi sur laquelle elles se déplacent, résultent de la composition de deux déplacements possibles, d'une part un déplacement D₁ qui résulte de la rotation globale de la roue autour de son axe x, x' et d'autre part un déplacement D₂ qui résulte de la possibilité de libre rotation du galet ou des galets en contact avec la paroi autour de leurs axes 58.

On comprend que, grâce à ces deux directions possibles de déplacement, l'ensemble du chariot pourra se déplacer même si la galerie ne présente pas un axe rectiligne sans qu'il soit pour cela nécessaire de prévoir des moyens de direction du chariot grâce à la composante transversale de déplacement D₂.

Sur la figure 2, on a représenté le chariot automoteur dans une portion de galerie rectiligne. Les deux bras 24 et 26 du train de roues sont symétriques par rapport à un plan médian vertical P, P' de la galerie H.

Sur la figure 2, le chanot est représenté dans une portion rectiligne de galerie H. Dans cette situation, les deux bras 24 et 26 de chaque train de roues sont symétriques par rapport à un plan vertical diamétral P, P' de la galerie. Il en va de même pour la benne 10 du chariot lorsque celle-ci est chargée symétriquement par rapport à l'axe longitudinal de supportage 16.

Sur la figure 6, on a représenté le chariot dans une portion de galerie H non rectiligne. Pour compenser le fait que cette portion de galerie n'est pas rectiligne, le déplacement longitudinal principal des trains de roues selon l'axe de la galerie se combine comme on l'a déjà expliqué avec un mouvement de rotation des galets 56 constituant ces roues. Cette composition de mouvements entraîne une rotation globale des trains de roues 12 et 14 par rapport au plan vertical P, P' de la galerie, autour de l'axe longitudinal de supportage 16. C'est ce qui est montré sur la figure 6.

Il est important de souligner que, grâce au fait que le centre de gravité G1 est disposé en dessous de l'axe de supportage 16 de la benne 12, celle-ci tend à reprendre une position verticale dès que la galerie H retrouve un profil rectiligne. De la même manière, de préférence, l'ensemble des trains de roues présente un centre de gravité G2 qui est disposé bien sûr en dessous de l'axe de supportage 16 mais également en dessous du centre de gravité G1 de la benne. Les moments résultant de ces positions relatives des centres de gravité tendent à ramener également les trains de roues 12 et 14 vers leur position de repos verticale (bras 24 et 26 symétriques par rapport au plan vertical P, P'), cette position étant représentée sur la figure 2.

Dans le mode de réalisation décrit précédemment, on a indiqué que chaque roue des trains de roues est constituée par trois disques 44 à 48 portant chacun des galets 56. Il va de soi que, pour certaines applications, chaque roue pourrait ne comporter qu'un disque équipé des galets décnts précédemment ou deux disques seulement.

## Revendications

1. Chariot automoteur apte à se déplacer dans une galerie de forme sensiblement cylindrique, comprenant :
. un châssis (11) constitué par deux trains de roues respectivement avant (12) et arrière (14),
. une benne (10) ; et
. un axe longitudinal (16) de supportage horizontal sur lequel est montée à pivotement ladite benne (10) selon le sens de sa longueur, chaque train de roues étant relié à une extrémité dudit axe de supportage ;
chaque train de roues comprenant :
* deux bras (24, 26), une première extrémité de chaque bras (24a, 26a) étant montée à pivotement sur une extrémité dudit axe de supportage (16), lesdits bras étant disposés dans un même plan orthogonal audit axe de supportage ;
* des moyens (34) pour maintenir un écartement angulaire entre les deux bras ;
* deux arbres (32) d'entraînement en rotation, chaque arbre étant monté à pivotement à la deuxième extrémité d'un des bras, lesdits arbres (32) étant orthogonaux audit axe de supportage (16) ;
* des moyens (38) d'entraînement en rotation desdits arbres (32) ; et
* deux roues (40, 42), chaque roue comportant un moyeu (54) solidaire d'un arbre (32) d'entraînement en rotation, au moins un disque (50) circulaire solidaire du moyeu (54) et dont la périphérie est munie d'une pluralité de galets (56) de roulement aptes à coopérer avec la paroi cylindrique de ladite galerie, chaque galet (56) étant monté libre en rotation autour d'un axe orthogonal à l'arbre d'entraînement en rotation de la roue.

2. Chariot selon la revendication 1, **caractérisé en ce que** le centre de gravité de ladite benne est disposé en dessous dudit axe de supportage de la benne.

3. Chariot selon l'une quelconque des revendications 1 et 2, **caractérisé en ce que** le centre de gravité de chaque train de roues est disposé en dessous du centre de gravité de la benne.

4. Chariot selon l'une quelconque des revendications 1 à 3, **caractérisé en ce que** chaque roue comporte trois disques parallèles entre eux et solidaires du moyeu de la roue, la périphérie de chaque disque étant munie desdits galets.

5. Chariot selon la revendication 4, **caractérisé en ce que** les galets de chaque disque sont angulairement régulièrement espacés.

6. Chariot selon la revendication 5, **caractérisé en ce que** les plans médians des galets orthogonaux aux axes de rotation des galets d'un disque sont angulairement décalés par rapport à ceux des deux autres disques.

7. Chariot selon l'une quelconque des revendications 4 à 6, **caractérisé en ce que** tous les galets sont sensiblement identiques et **en ce que** le cercle auquel les axes de rotation des galets du disque central sont tangents, est supérieur à celui des deux disques latéraux.

8. Chariot selon l'une quelconque des revendications 1 à 7, **caractérisé en ce que** les moyens pour maintenir l'écartement des deux bras d'un train de roues sont réglables, par quoi ledit écartement peut être adapté au diamètre de ladite galerie.

9. Chariot selon l'une quelconque des revendications 1 à 8, **caractérisé en ce que** la surface de roulement de chaque galet est une surface de révolution autour de l'axe de rotation du galet et dont la génératrice est une portion d'arc de cercle.

10. Chariot selon l'une quelconque des revendications 1 à 9, caracténsé en ce qu'il comprend en outre deux longerons parallèles audit axe de supportage, chaque longeron solidansant un bras d'un des trains de roues avec le bras correspondant de l'autre train de roues.

## Patentansprüche

1. Selbstfahrender Wagen, der sich in einem im Wesentlichen zylindrischen Stollen zu bewegen vermag, mit
- einem aus einem vorderen (12) bzw. einem hinteren Radsatz (14) gebildeten Fahrgestell (11),
- einem Wagenkasten (10) und
- einer waagerechten Längstragachse (16), auf der der Wagenkasten (10) in seiner Längsrichtung schwenkbar angebracht ist, wobei jeder Radsatz mit einem Ende der Tragachse verbunden ist;
wobei jeder Radsatz aufweist:
* zwei Arme (24, 26), wobei ein erstes Ende jedes Arms (24a, 26a) schwenkbar an einem Ende der Tragachse (16) angebracht ist und die Arme in ein- und derselben Orthogonalebene zu der Tragachse angeordnet sind;
* Mittel (34) zum Einhalten eines Winkelabstandes zwischen den beiden Armen;
* zwei Antriebswellen (32), wobei jede Welle schwenkbar am zweiten Ende eines der Arme angebracht ist, wobei diese Wellen (32) orthogonal zu der Tragachse (16) ausgerichtet sind;
* Mittel (38), um die Wellen (32) in Drehung zu versetzen und
* zwei Räder (40, 42), wobei jedes Rad eine mit einer Antriebswelle (32) fest verbundene Nabe (54) und wenigstens eine mit der Nabe (54) fest verbundene kreisförmige Scheibe (50) umfasst, deren Umfang mit einer Vielzahl von Laufrollen (56) versehen ist, die mit der zylindrischen Wand des Stollens zusammenzuwirken vermögen, wobei jede Rolle (56) frei drehbar um eine zur Antriebswelle des Rades orthogonale Achse angebracht ist.

2. Wagen nach Anspruch 1,
**dadurch gekennzeichnet, dass** der Schwerpunkt des Wagenkastens unterhalb der Tragachse des Wagenkastens angeordnet ist.

3. Wagen nach Anspruch 1 oder 2,
**dadurch gekennzeichnet, dass** der Schwerpunkt jedes Radsatzes unterhalb des Schwerpunkts des Wagenkastens angeordnet ist.

4. Wagen nach einem der Ansprüche 1 bis 3,
**dadurch gekennzeichnet, dass** jedes Rad drei zueinander parallele, fest mit der Radnabe verbundene Scheiben umfasst, wobei der Umfang jeder Scheibe mit den Rollen versehen ist.

5. Wagen nach Anspruch 4,
**dadurch gekennzeichnet, dass** die Rollen jeder Scheibe gleichmäßige Winketabstände aufweisen.

6. Wagen nach Anspruch 5,
**dadurch gekennzeichnet, dass** die Mittelebenen der Rollen, die zu den Drehachsen der Rollen einer Scheibe orthogonal sind, in Bezug auf die der anderen beiden Scheiben winkelmäßig versetzt sind.

7. Wagen nach einem der Ansprüche 4 bis 6,
**dadurch gekennzeichnet, dass** sämtliche Rollen im Wesentlichen identisch sind und dass der Kreis, den die Drehachsen der Rollen der mittleren Scheibe tangieren, größer ist als der der beiden seitlichen Scheiben.

8. Wagen nach einem der Ansprüche 1 bis 7,
**dadurch gekennzeichnet, dass** die Mittel zum Einhalten des Abstandes zwischen den beiden Armen eines Radsatzes einstellbar sind, wodurch dieser Abstand an den Durchmesser des Stollens angepasst werden kann.

9. Wagen nach einem der Ansprüche 1 bis 8,
**dadurch gekennzeichnet, dass** die Lauffläche jeder Rolle eine Rotationsfläche um die Drehachse der Rolle ist, deren Mantellinie ein Kreisbogenabschnitt ist.

10. Wagen nach einem der Ansprüche 1 bis 9,
**dadurch gekennzeichnet, dass** er außerdem zwei zu der Tragachse parallele Längsträger aufweist, wobei jeder Längsträger einen Arm eines der Radsätze mit dem entsprechenden Arm des anderen Radsatzes verbindet.

## Claims

1. A self-propelled carriage suitable for moving in a gallery of substantially cylindrical shape, the carriage comprising:
· a chassis (11) constituted by two wheel sets, respectively a front set (12) and a rear set (14);
· a skip (10); and
· a horizontal longitudinal support axis (16) on which said skip (10) is pivotally mounted in its length direction, each wheel set being connected to a respective end of said support axis;
each wheel set comprising:
· two arms (24, 26), a first end of each arm (24a, 26a) being pivotally mounted on one end of said support axis (16), said arms lying in a common plane orthogonal to said support axis;
· means (34) for maintaining both arms at a constant angular separation;
· two rotary drive shafts (32), each shaft being pivotally mounted at the second end of a respective arm, said shafts (32) being orthogonal to said support axis (16);
· means (38) for rotating said drive shafts (32) ; and
· two wheels (40, 42), each wheel comprising a hub (54) secured to a corresponding rotary drive shaft (32), at least one circular disk (50) secured to the hub (54), and at its periphery a plurality of rollers (56) for co-operating with the cylindrical wall of said gallery, each roller (56) being mounted to rotate freely about an axis that is orthogonal to the rotary drive shaft of the wheel.

2. A carriage according to claim 1, **characterised in that** the centre of gravity of said skip lies beneath said skip support axis.

3. A carriage according to claim 1 or claim 2, **characterised in that** the centre of gravity of each wheel set lies beneath the centre of gravity of the skip.

4. A carriage according to any one of claims 1 to 3, **characterised in that** each wheel comprises three mutually parallel disks secured to the wheel hub, the periphery of each disk being provided with said rollers.

5. A carriage according to claim 4, **characterised in that** the rollers on each disk are regularly spaced apart angularly.

6. A carriage according to claim 5, **characterised in that** the mid-planes of the rollers orthogonal to the axes of rotation of the rollers on one disk are angularly offset relative to the corresponding mid-planes of the rollers on the other two disks.

7. A carriage according to any one of claims 4 to 6, **characterised in that** all of the rollers are substantially identical, and **in that** the circle to which the axis of rotation of the rollers of the central disk are tangential is of diameter greater than the corresponding diameters of the two side disks.

8. A carriage according to any one of claims 1 to 7, **characterised in that** the means for maintaining the two arms of a wheel set at a constant spacing are adjustable, thereby enabling said spacing to be adapted to match the diameter of said gallery.

9. A carriage according to any one of claims 1 to 8, **characterised in that** the rolling surface of each roller is a surface of revolution about the axis of rotation of the roller and having a generator line constituted by a circular arc.

10. A carriage according to any one of claims 1 to 9, **characterised in that** it further comprises two longitudinally extending members parallel to said support axis, each longitudinally extending member securing one arm of one of the wheel sets to the corresponding arm of the other wheel set.
